# EUROPEAN PATENT APPLICATION

(11) **EP 2 916 274 A1**
(43) Date of publication of application: **09.09.2015**
(21) Application number: 14157557.1
(22) Date of filing: 04.03.2014
(51) Int. Cl.: G06Q 10/08

(54) **Method of integrating postal service**

(71) Applicant: Integer.pl S.A., 30-624 Krakow (PL)
(72) Inventor: Gruca, Krzysztof, 30-611 Kraków (PL)
(74) Representative: Kilchert, Jochen

(57) **Abstract**

The present invention provides a system and a method for the sending of packages between a sender system (2) and a post system (4). The post system (4) generates a terminal list indicative of the current status of one or more post box terminals within a post network (6), wherein the package is deposited to an allocated post box terminal. The post system (4) is adapted to operate without storing sensitive information related to an end customer (8) who is to collect the package. The post system (4) notifies the sender system (2) of a change in a current status of the package, such that the sender system (2) can track the package without communicating sensitive information to the sender system (2).

## Description

The present invention relates to a method, a computer readable device comprising instructions to perform the method, and a system for integrating a postal service with an existing service.

Recent trends in postal services are favouring an approach of using remote post box terminals providing at various locations which are designed to be accessible by a receiver or end customer of a sent package.

In such systems, a package is dispatched by a courier service or the like to a remote post box terminal and is stored in a locked compartment of the terminal. Generally, the post box terminal comprises a plurality of compartments that can be locked and unlocked by the courier and packages disposed therein. Accordingly, an end customer of the package, or an intended receiver, may be alerted that a package is ready for collection at the postal terminal and may subsequently proceed to the post box terminal to collect the package.

In this manner, an end customer is able to interact with the post box terminal, usually via a unique identification code or similar information, and subsequently collect the package from the post box terminal. Some terminals also provide cash on delivery (COD) functionality, thus enabling an end customer to appropriately pay for the delivery of the package.

Such systems offer many advantages, a main advantage being the flexibility in collection time afforded to the end customer.

In DE 10 301 137 A1 a normal method for sending and receiving parcels is described.

In the traditional systems, responsibilities for the package, i.e., tracking, dispatching, delivery, and payment, are generally handled by a main postal service or system. In many cases, multiple senders or sender systems that dispatch the package(s) may wish to use the postal service at any one time, which results in an ever increasing volume of data to be processed. The volume of data to be processed is expanded further given that many senders use their own courier service and/or payment system. As a result, calculation requirements are often increased leading to a decrease in processing speeds. Systems then require improved processing capabilities which can often be difficult to integrate with existing systems and be rather costly.

Moreover, traditional post systems are designed as standalone systems, meaning that they require their own, complete set of data to operate. In such an arrangement, the duplication of data is often present given that both the sender system and post system require similar data. For example, an end customer's email address and phone number is often shared between the systems, with both systems subsequently storing this data. Accordingly, storage space is needlessly used in addition to communication bandwidth when transmitting the data between the systems.

In addition, many elements of personal or identification information are exchanged between the end customer, the sender or sender system from which the end customer purchases the package, and the postal service. In existing systems, personal identification information may be communicated between the sender from which the end customer purchases the package and the post system, whereby the post system processes the identification information and assigns a tracking number and the like.

This communication can often be prone to security issues, such as attacks from hackers and the like. This problem is compounded further when the personal identification information can include account information and more financially sensitive information.

In the traditional systems, post systems and sender systems are often used together but rarely seamlessly integrated, at least in an efficient and productive manner. The current integration often results in the waste of storage space, communication bandwidth, and processing power, given that many tasks are performed within both systems.

A need exists, therefore, for efficiently integrating post system and a sender system, while further providing a secure system that allows the posting of packages with minimal security risks for the senders and end customers using the postal service. There also exists a need to reduce the processing burden on the post system and/or sender system while further reducing the volume of data required to be stored on both systems.

The problem is solved by a method for the sending of packages comprising the steps of;
- assigning, at a sender system, one or more packages to be sent to an end customer;
- generating a terminal list indicative of the current status of one or more post box terminals, the one or more post box terminals monitored by a post system;
- allocating, on the basis of the terminal list, one or more available post box terminals from the one or more post box terminals to the one or more packages;
- providing the one or more packages to the one or more allocated post box terminals;
- alerting the end customer that the one or more packages are ready for collection;
- transmitting transaction information to the end customer, indicative of a transaction to be performed, and, if the transaction is successful, allowing the end customer to collect the one or more packages,
- wherein the post system notifies the sender system of a current package status change event when a current package status of the one or more packages changes and of a transaction event indicative of when the end customer initiates the transaction.

The present invention provides a secure method for distributing one or more packages to an end customer from a sender system. In some case, more than one sender system can be registered with a single post system. A terminal list comprising an indication of available compartments of a post box terminal is provided to the sender system. An end customer, or at this point buyer, places an order of products to purchase with the sender system and, upon receipt of the terminal list, one or more available post box terminals are allocated to the one or more packages. Once the packages are delivered to the one or more post box terminals, an alert is sent to the end customer informing the end customer that the one or more packages are ready for collection.

Thereafter, the end customer interacts with the one or more post box terminals and subsequently receives the one or more packages. In some embodiments, the transaction information is transmitted when the end customer interacts with the post box terminal, and in other embodiments the transaction information is provided when the end customer places or completes the order.

In the embodiment described above, the post system notifies the sender system when a current status of the package changes and when a transaction event is performed. In some embodiments, the post system and sender system each comprise one or more separate databases, and each comprise one or more communication modules. In some arrangements, only a package status change event and a transaction event are communicated between the sender system and the post system. In a preferred arrangement, the one or more packages are identified only by a unique package identification code.

This enables much faster processing times at both the sender system and post system given that only necessary data is communicated between the two systems. In addition, a much more secure transfer of data between the post system and sender system is realised as personal information may not be exchanged. Furthermore, a tracking procedure of the packages can be carried out with efficiency as only the relevant systems are informed of and store the tracking information.

In a further embodiment, the steps of generating a terminal list and allocating an available post box terminal are performed by the sender system, and the transaction information is transmitted by the sender system and the transaction is performed by the sender system communicating with an external cash system upon receiving the transaction event.

In this embodiment, the sender system retains all personal and financial data, thus preferentially, none of the personal information is communicated to the post system. A secure communication channel is provided between the sender system and the external cash system, thereby enabling any monetary transactions to be performed securely. Such communication channels can include a designated VPN channel, or a channel employing security protocols such as IP Security (IPSec) or TSL/SSL. The type of secure communication is not limited to these, however, and may be any type of secure channel.

Yet another embodiment additionally includes providing an integration interface, the integration interface enabling communication between the sender system and the post system. The integration interface may employ a data push mechanism that enables a user of the sender system to request at least one of the terminal list, and a list of the current package statuses of the one or more packages from the post system.

The sender system may be adapted to query the current status of the one or more packages and/or the available terminals from the post system. Indeed, in order to accurately assign a package or package identification number to a post box terminal, the sender system may require access to the terminal list. In further cases, as a fail-safe mechanism, the sender system can obtain the current status of the one or more packages in order to accurately track the one or more packages.

According to a further embodiment, the current package status of the one or more packages may include one of:
- sent, indicating that the one or more packages are sent from the sender system to a courier agency;
- in transit, indicating that the one or more packages are in transit from a courier agency to the one or more post box terminals;
- stored, indicating that the one or more packages are located at the one or more post box terminals;
- claimed or delivered, indicating that the one or more packages have been claimed by the end customer or delivered to the end customer;
- expired, indicating that a time for which the end customer may collect the one or more packages has expired;
- return, indicating that the one or more packages are to be returned to the sender system by a courier agency;
- avizo, indicating that a certain time has elapsed since the end customer was notified that the one or more packages were ready for collection and that the end customer is to be reminded that the one or more packages are still awaiting collection;
- missing, indicating that the one or more packages are not present at the one or more post box terminals and do not fall under one of the aforementioned statuses; and
- cancelled, indicating that the end customer has cancelled the collection or delivery of the one or more packages or that the sender system has cancelled the collection or delivery of the one or more packages.

Providing an indication of the change of package status to the sender system enables the sender system to accurately track exactly where the one or more packages are and exactly what state the packages are in, thus providing security to the end customer when, for example, the end customer enquires as to the location or status of their package.

A further embodiment, in particular to that above, details that the current package status change event is sent from the post system to the sender system when the current package status changes from a first current package status to a second current package status.

In this case, the package status change event is communicated regardless of the status, thereby informing the sender system of any changes to the current status of the one or more packages. An indication of the new status may also be preferentially sent.

In some embodiments, the transmitting of the transaction amount includes the sender system receiving a current package status change event indicative of a request to distribute the one or more packages at the one or more post box terminals to the end customer, providing a transaction amount to the end customer, receiving a request to pay the transaction amount at the post system, forwarding the request to pay the transaction amount to the sender system as the transaction event, processing the transaction amount at the sender system and debiting an account of the end customer, and sending a result of payment to the end customer. Alternatively, the transmitting of the transaction amount includes the post system receiving a request to distribute the one or more packages at the one or more post box terminals to the end customer, transmitting, as the transaction event, a request for the transaction amount from the sender system, providing a transaction amount to the end customer, receiving a monetary transaction at the one or more post box terminals, crediting an account of the one or more post box terminals with an amount equal to the transaction amount, forwarding a confirmation of payment of the transaction amount to the sender system, debiting an account of the post system by the transaction amount and crediting an account of the sender system by the transaction amount.

The transmission of the transaction amount depends upon the intended method of payment of the end customer. When payment by card is chosen, preferentially the transaction is performed via the sender system, where the personal and financial data is stored, and the transaction with the cash system is effected through the sender system. In some cases, a secure communication channel may be established between the post system and the sender system to allow for the communication of financially sensitive data. When a cash transaction is selected, all payment with the end customer is effected at the post box terminal, whereby the account associated with the sender system is credited at a later stage.

In a preferred embodiment, when the debiting of the end customer's account results in a negative value, the result of payment includes a notice of failure of the transaction and the end customer is prevented from claiming the one or more packages. Preferably, the result of payment includes a link to the end customer's account thereby facilitating a top up of the end customer's account. Accordingly, an end customer may update their current balance or credit associated with their account such that the transaction may be completed when an error message or insufficient balance message is communicated.

The method may also comprise tracking the one or more packages, performed by the sender system. The post system may provide the current package status change event of the one or more packages in addition to a time stamp associated with the current package status change events, the sender system storing the current package status change events and the corresponding time stamp.

Communicating a time stamp, in addition to the package status change events, can aid in creating a tracking log of the one or more packages. This may be particularly useful in order to track a package within the system from start to finish, rather than just a current location. Such a log can help identify problems within the posting system as well as any potential blockages or undelivered packages.

Yet another embodiment details that the assigning includes assigning at least one or all of a package identification number, an email address of the end customer, an email address of a sender, a package size, a phone number of the end customer, and a pick up code to the one or more packages, wherein preferably the assigning further includes assigning at least one or all of an on-delivery amount, an end customer identification number or code, an expiration time, an avizo time, and a carrier reference to the one or more packages.

In this embodiment, the assigning at the sender system includes the assigning of additional information, such as the end customer's identification details. As stated above, this information may be stored within the sender system, thereby retaining all personal information within the sender system itself, reducing the risk of personal data being obtained by a third party during the communication thereof. In some further arrangements, the personal information may be communicated to the post system or some part of the information, e.g., the third, fifth, and second digits of the end customer's phone number. Preferably, this is performed via a secure channel which is set up between the post and sender systems.

In some methods, the allocating includes allocating a post box terminal number to the one or more packages, the post box terminal number indicative of the location of the post box terminal to which the one or more packages are assigned.

In some cases the sender system may allocate a post box terminal number or the post system may allocate the post box terminal number to the package. This may also be performed on the basis of a location, i.e., the correspondence between the location of the post box terminal and the desired delivery address stated by the end customer.

In some embodiments, providing of the one or more packages to the one or more post box terminals includes the sender system or the post system managing a list of courier agencies and selecting an appropriate courier agency depending upon a delivery schedule and/or delivery routes of the selected courier agency.

The selection of a courier to deliver a package may be performed on the basis of analysing the availability of a courier. This may include identifying a courier that operates in an area local to the delivery address of the package, or it may include monitoring the delivery route of a courier to select an appropriate courier service.

In some embodiments, the alerting includes sending an SMS or an email to the end customer, the SMS or email generated on the basis of a package status change event of the one or more packages, the SMS or email generated by either the sender system or the post system. Preferably, the package status change event is indicative of a transition from a current package status of sent or in transit to stored.

In a preferred embodiment, the alert is provided to a portable device of an end customer. The alert is provided when the package is delivered such that the end customer may be notified almost instantly that the package is available for collection.

In some cases, the list of current package statuses includes the current package status of the one or more packages assigned to the one or more post box terminals and includes a status for each of the one or more packages of one of:
- sent, indicating that the one or more packages are sent from the sender system to a courier agency;
- in transit, indicating that the one or more packages are in transit from a courier agency to one or more post box terminals;
- stored, indicating that the one or more packages are located at the one or more post box terminals;
- claimed or delivered, indicating that the one or more packages have been claimed by one or more end customers or delivered to the one or more end customers;
- expired, indicating that a time for which the one or more end customers may collect the one or more packages has expired;
- return, indicating that the one or more packages are to be returned to the sender system by a courier agency;
- avizo, indicating that a certain time has elapsed since the one or more end customers were notified that the one or more packages were ready for collection and that the one or more end customers are to be reminded that the one or more packages are still awaiting collection;
- missing, indicating that the one or more packages are not present at the one or more post box terminals and do not fall under one of the aforementioned statuses; and
- cancelled, indicating that the one or more end customers have cancelled the collection or delivery of the one or more packages or that the sender has cancelled the collection or delivery of the one or more packages.

Providing the terminal list with an indication of all the statuses of the packages currently processed by the sender system may aid in auditing purposes of for confirming the statuses of the currently tracked packages. The terminal list may include an indication of one or more post box terminals that are currently in use, reserved for a different use, soiled or broken, and empty.

The problem is also solved by a system for the sending of packages, preferentially adapted to perform one of the methods described above, the system comprising;
- a sender system, adapted to assign one or more packages to be sent to an end customer;
- a post system adapted to monitor the status of one or more post box terminals and generate a terminal list of the statuses of the one or more post box terminals, the one or more post box terminals adapted to receive one or more of the one or more packages, the post system adapted to transmit transaction information to the end customer indicative of a transaction to be performed, and, if the transaction is successful, allow the end customer to collect the one or more packages;
- wherein, the sender system is further adapted to allocate, on the basis of the terminal list, an available post box terminal from the one or more post box terminals to the one or more packages;
- wherein, the sender system or the post system is further adapted to alert the end customer that the one or more packages are ready for collection, and
- wherein the post system is adapted to notify the sender system of a current package status change event when a current package status of the one or more packages changes and of a transaction event indicative of when the end customer initiates the transaction.

The problem is further solved by a computer readable device comprising instructions that, when executed, perform the method of any of the methods described above.

These and other aspects of the invention will be apparent from and elucidated with reference to the embodiments described hereinafter.

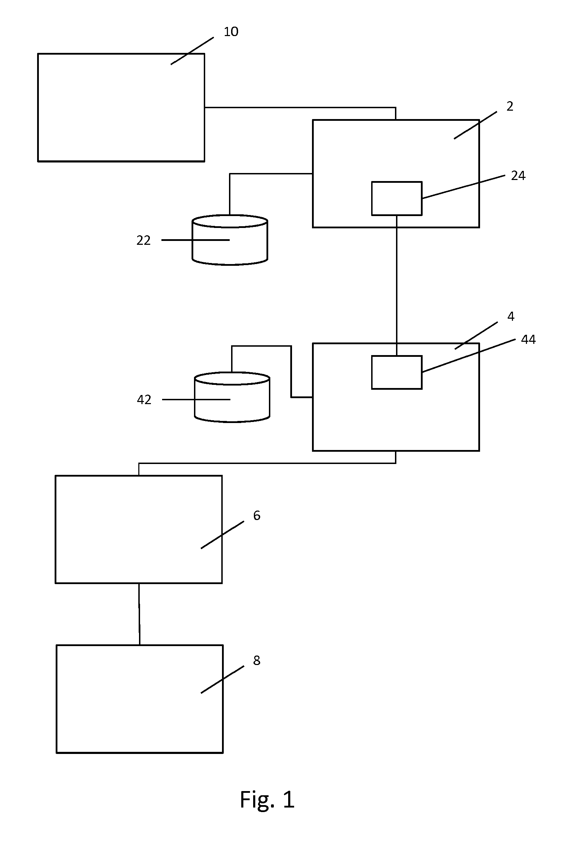

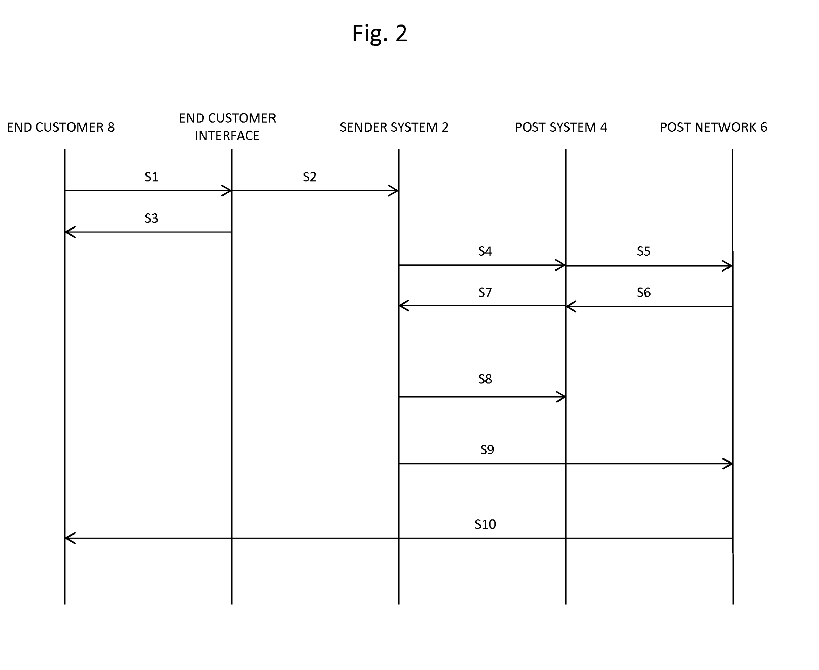

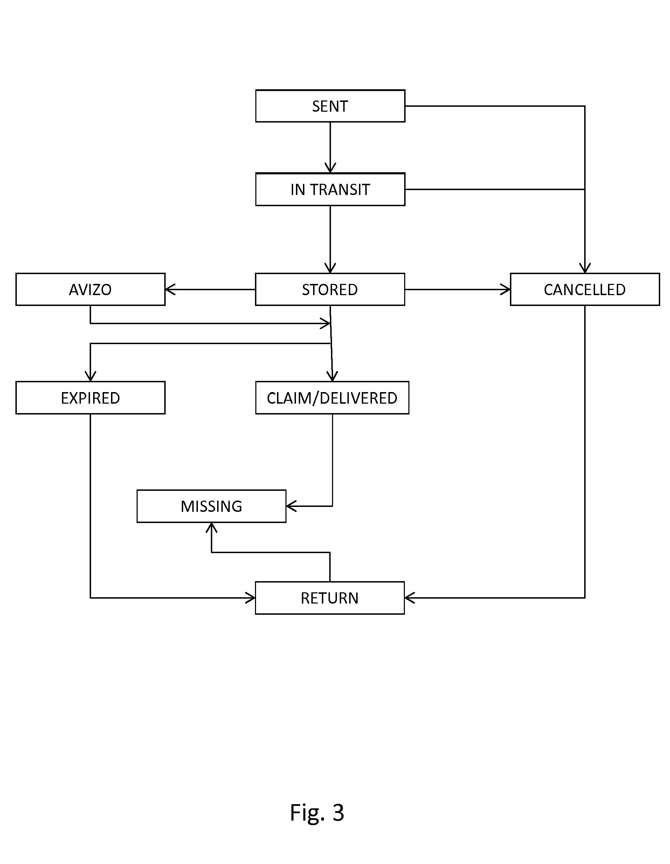

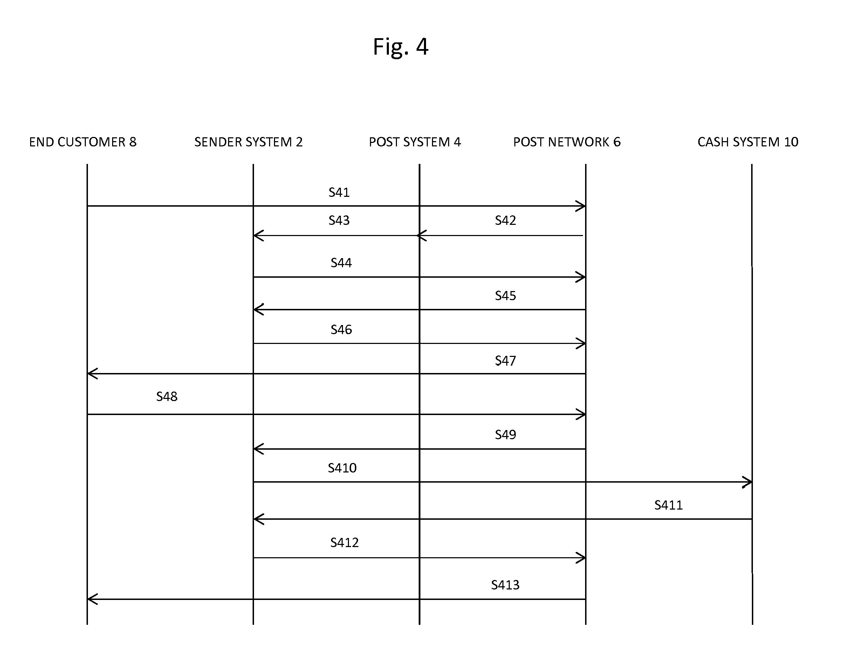

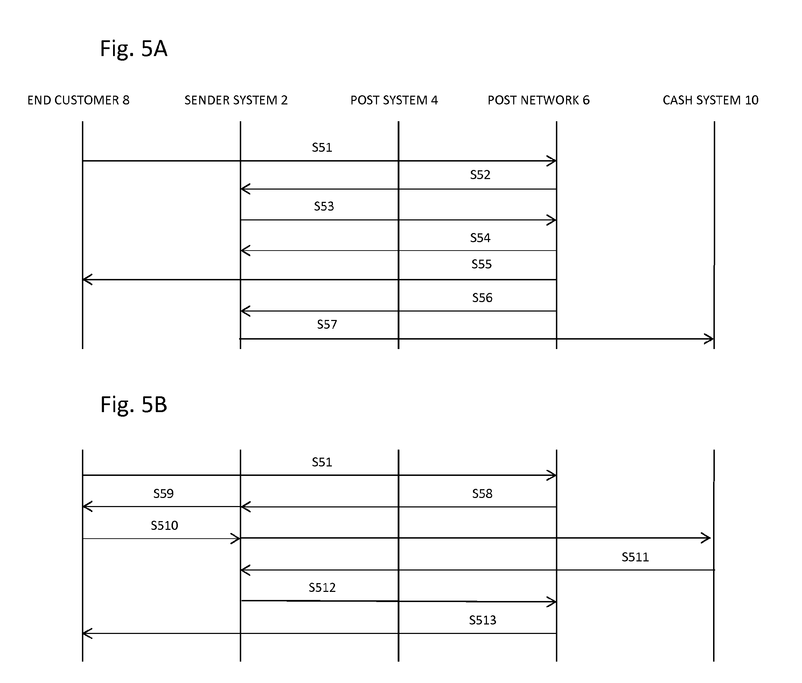

In the following drawings:
● Fig. 1 shows an exemplary system for securely posting packages including a sender system and a post system;
● Fig. 2 shows an exemplary method of the allocating and delivery of the package to a post box terminal;
● Fig. 3 shows a flow diagram of exemplary current package statuses;
● Fig. 4 shows an exemplary method of performing a cash on delivery transaction using a payment card;
● Fig. 5A shows an exemplary method of performing a cash on delivery transaction using cash;
● Fig. 5B shows an exemplary method of performing a cash on delivery transaction using an end customer's device.

Fig. 1 depicts an exemplary system according to an embodiment of the invention. A sender system 2 is provided in communication with a post system 4. The communication may be preferentially achieved via only three connection points (a package status connection, a transaction connection, and an administration connection) and one website access. Accordingly, such a connection speeds up the entire process of communication as a whole. The present invention is not limited to three connection points, and may include any number thereof, more or less than three. Equally, more than one website access may also be provided.

The sender system 2 may be any type of computer implemented system or manually implemented system, but is preferably a system related to a business or corporate entity. In one embodiment, the sender system 2 is an entity that sells goods to consumers; for example, an online shopping website or the like. Although only one sender system 2 is illustrated in Fig. 1, any number of sender systems 2 can be connected to the post system 4. Each sender system 2 may be provided with a database 22 and a communication module 24 provided to effectuate communications with the post system 4. While only one database 22 and one communication module 24 are provided in Fig. 1, any number of databases 22 or communication modules 24 may be provided. As discussed below, a different communication module, or the same communication module 24, may be provided to allow for communications between the sender system 2 and a cash system 10.

In comparison, the post system 4 is also provided with a database 42 and a communication module 44. While only one database 42 and one communication module 44 are provided, any number of databases 42 or communication modules 44 may be provided. The communication module 44 is provided to allow for communication with the communication module 24 of the sender system 2. The type of communication provided is preferably a two-way communication. As with the sender system 2, a different communication module, or the same communication module 44, may be provided to allow for communications between the post system 4 and a post network 6. Preferably, all communications between the post system 4 and the sender system 2 are carried out via the communication modules 24, 44.

When a user desires to purchase a product or products from the sender system 2, an order is placed and correspondingly a package containing the product or products is prepared. In some embodiments, and as described with reference to Fig. 2, a web service or end customer interface may be provided by the sender system 2 to allow the end customer 8 to interact with the sender system 2 and consequently place an order. As described in more detail below, the package is transferred to the post network 6 which is governed by the post system 4. The post network 6 contains many post box terminals similar to those described previously. The post box terminals each comprise a number of compartments adapted to hold packages from one or more sender systems 2.

A user who is to receive the package is referred to herein as an end customer 8. For simplicity, the end customer 8 is also used herein to refer to the user who places the order with the sender system 2 - that is, the user who places the order also receives the package(s). The present invention, however, is not limited to this interpretation, and the user who places the order with the sender system 2 may be different from the end customer 8.

In addition, as shown in Fig. 1, a cash system 10 may also be provided. In a preferred embodiment, the cash system 10 is an independent system that communicates with the sender system 2 in order to complete a transaction between the end customer 8 and the sender system 2. In some arrangements, when the end customer 8 places the order through the end customer interface of the sender system 2, the cash system 10 is automatically contacted after completion of the order, whereby the end customer 8 may interact with the cash system 10 to credit an account belonging to the sender system 2 (and correspondingly debit an account belonging to the end customer 8). In this arrangement, all transaction processes are performed before the package is deposited in the post box terminal and the end customer 8 needs only to verify their identity upon collection of the package. Other arrangements allow for cash on delivery transactions, and require a different transaction strategy as described later.

Fig. 2 shows an exemplary method for the sending of packages. Fig. 2 shows the end customer 8, the sender system 2, the post system 4, the post network 6, and the cash system 10. In addition, Fig. 2 shows the end customer interface. The end customer interface may be provided at either one of the post system 4 or the sender system 2, but is preferentially hosted by the sender system 2. In this sense, the end customer interface may be a front end interface of the sender system 2, and may be adapted to receive information from the end customer 8, such as order details, desired products, delivery information, and/or payment information.

Referring to the steps of Fig. 2, the end customer 8 may place an order via the end customer interface, shown in step S1. The order may include the products desired for delivery as well as information regarding the end customer 8, such as identification information and the like. In a preferred embodiment, the identification information includes a mobile telephone number and/or an email address of the end customer 8.

At step S2, the order is transferred to the sender system 2. This may be performed whilst the order is still being placed, item by item, or may be performed once the order is complete such that all items are processed at once. At step S3, a confirmation may be sent to the end customer 8 via the end customer interface, wherein the confirmation confirms that the order has been successfully placed. As discussed above, an additional step may be provided whereby the end customer 8 communicates with the cash system 10 via the end customer interface and/or sender system 2 to complete any cash transaction.

Once the sender system 2 obtains the order, the sender system 2 may query the post system 4. That is, the sender system 2 sends a request to the post system 4, via the communication module 24, for a terminal list, step S4, whereby the terminal list indicates the current state of the post box terminals of the post network 6. In some embodiments, the terminal list may include only the available post box terminals, i.e., post box terminals that currently do not have a package stored in one or more compartments. In addition, the terminal list may also provide an indication of the available compartments, and storage sizes thereof, of the post box terminal, i.e., post box terminal X contains Y free compartments of a first size and Z free compartments of a second size.

An exemplary terminal list, terminal list A, indicating the available terminals, i.e., the terminals with available compartments, a location tag indicative of a location of the terminal, and the compartment sizes is shown below:

| Terminal ID Number | Location Tag | Free Compartments | | |
|---|---|---|---|---|
| | | Size 1 | Size 2 | Size 3 |
| 0041 | PostCode1 | 0 | 1 | 2 |
| 0062 | PostCode2 | 1 | 4 | 0 |

In other embodiments, the terminal list may be provided only on the basis of location information. For example, the end customer 8 may specify a desired delivery location, i.e., within 10 kilometers of a specific post code, and the sender system 2 may query the post system 4 to provide a terminal list of available post box terminals within the specified 10 kilometers. This enables the volume of data to be sent to and processed by the sender system 2 to be significantly reduced, as only a small section of the total terminal list is required.

Other variations may also provide a terminal list that indicates if a compartment of the post box terminal is currently in use, reserved for a different use, soiled or broken (as reported by an end customer 8 or courier), and empty/available.

For example, an alternative terminal list, terminal list B, is indicated below:

| Terminal ID Number | Compartment Number | Status |
|---|---|---|
| 0041 | 01 | IN USE |
| | 02 | RESERVED |
| | 03 | EMPTY/AVAILABLE |
| 0042 | 01 | EMPTY/AVAILABLE |
| | 02 | BROKEN |

While the above terminal lists are shown as two separate examples, it should be appreciated that any of the concepts may be combined. For example, a location tag may also be assigned to the terminal list B.

In steps S5 and S6, once the request is sent to the post system 4, the post system 4 may query the post network 6 (step S5) and collect information therefrom regarding the available post box terminals (step S6). This process may be an active process and triggered specifically when the request is sent from the sender system 2, or may be a passive process such that the post system 4 continually monitors the availability or status of the post box terminals, and stores and updates the terminal list within the database 42. Once the data is collected, the terminal list may be communicated, via the communication module 44 to the sender system 2, as shown in step S7.

At this point, the sender system 2 has the required information to allocate a tracking number to the package and to allocate an available post box terminal and/or compartment. Accordingly, a package identification number or unique tracking number can be assigned to the package and to the post box terminal. Regarding the package identification number, such a number is generally a unique number within the system. The allocated data may be deposited within the database 22.

In some cases, the package identification number is allocated by the sender system 2 on the basis of a prefix code. For example, a sender system 2 related to one company may have the prefix code 54 and another sender system 2 of a different company may have the prefix code 38. A unique package identification number may then be formed on the basis of the prefix - whereby the generated number is unique in the post system 4 owing to the unique prefix code. An alternative arrangement is that the post system 4 is adapted to allocate package identification numbers based upon the available post box terminals. For example, a compartment number of the post box terminal may be used as the package identification number. Alternatively, the package identification number is generated by the post system 4 depending upon the current package identification numbers tracked in the post system 4 such that the package identification number is guaranteed to be unique to the post system 4. When the package identification number is provided by the post system 4, the package identification number may be sent at the same time as the terminal list.

At step S8, the package identification number or chosen package identification number is communicated, via the communication module 24, to the post system 4. At this point, the post system 4 may update the status of the compartment of the post box terminal or the number of available compartments of the post box terminal. In some cases, this means that the terminal list stored in the database 42 is updated.

The package may then be dispatched by the sender system 2 to an appropriate courier service, whereby the courier service delivers the package to the post network 6, or more specifically, to the allocated post box terminal (step S9).

In this regard, the compartments of the post box terminal do not necessarily have to be assigned to the package or package identification number. Rather, only the post box terminal may be assigned. For example, when the tracking list indicates that a post box terminal has three compartments free, the package may be stored in any one of the three compartments and so a specific indication or identification is not required. Accordingly, when a package is allocated to a post box terminal, the status of the post box terminal is updated - in other words, the post box terminal may now have two available compartments. Providing this information also reduces the data to be processed by the sender system 2.

Upon delivery or storage of the package at the post box terminal, the end customer 8 may be alerted that the package is ready for collection, step S10. The alert may be any type of alert, but is preferentially an alert email or SMS message based upon the previously obtained end customer's 8 email or telephone number. Step S10 shows the post network 6 communicating the alert to the end customer 8. However, the alert may be generated and issued by any of the post network 6, post system 4 or sender system 2. Preferentially, the sender system 2 communicates the alert. In any case, a confirmation of delivery may be communicated by the post network 6 to the post system 4 and/or sender system 2.

In a preferential embodiment, when the package arrives at the allocated post box terminal, the post system 4 sends a notification that the package is now stored in the post box terminal to the sender system 2. Preferably, this is sent via a communication between the communication modules 44, 24. In this regard, the notification can include an indication of a change in the current status of the package. Once received by the sender system 2, the sender system 2 can perform the necessary actions, in this case the sending of the alert.

As shown in Fig. 3, the current package status can be many different values. A first package status is that of "sent". A sent status indicates that the package has been registered by the sender system 2, i.e., assigned a package identification number and/or post box terminal, and has been dispatched and delivered to a courier. This status may be monitored by the sender system 2. In this regard, the sender system 2 may preferentially be adapted to monitor or log the current status of the package, for example in the database 22 or the like.

A subsequent and optional status is that of "in transit", indicating that the package is in transit from a courier agency to the one or more post box terminals. Such a status may be indicated from the courier agency to the sender system 2. This status may not, however, be monitored at all.

Once the package arrives at the post box terminal, a status of "stored" is allocated, which indicates that the package is deposited in one of the compartments of the allocated post box terminal. This status is, preferentially, indicated when the courier has locked the compartment once the package is deposited therein. In this regard, the post system 4 may be notified of the actual compartment assigned to the package, such that the post system 4 tracks the explicit location of the package and thus can monitor any further action taken. In other words, the courier may enter or scan a code (such as a bar code) indicative of the unique package identification number of the package upon entry into the compartment. Accordingly, the post system 4 allocates a compartment number to the package identification number. In a preferred embodiment, the sender system 2 is not informed of the compartment number.

Once stored, the sender system 2 is notified by the post system 4 that the package, and corresponding package identification number, is stored in the post box terminal. Thereafter, the end customer 8 is alerted as discussed above. Accordingly, the end customer 8 is able to then claim or collect the package from the allocated post box terminal. The end customer 8 may arrive at the post box terminal and correspondingly verify the end customer's 8 ID and complete any monetary transactions, and subsequently remove the package from the compartment. At this point the current package status is set to "claimed or delivered", indicating that the package has been claimed by or delivered to the end customer 8.

To verify the end customer's identification, a pick up code may be communicated to the end customer 8. The pickup code may be communicated to the end customer 8 and the post system 4 at an initial point of the posting process. For example, the pickup code may be communicated when the end customer 8 places the order or when the end customer receives 8 the alert. Equally, the post system 4 may be provided with the pickup code at any point during the posting process. In a preferred embodiment, the pickup code is sent to the end customer's personal device after notification from the post box terminal that the end customer 8 wishes to collect the package. Accordingly, the pickup code may be transmitted to both the end customer's device and the post box terminal once the sender system 2 receives the notification from the post system 4. Other items of data, such as a mobile phone number, email address, or parts thereof may also be used as the verification information.

Several other optional statuses may also be monitored. In some cases, a time limit may be imposed upon the package, whereby the time limit is a time period in which the end customer 8 may collect the package, for example, a period of 48 hours from the transmission of the alert may be assigned. Accordingly, once the time limit has expired, an "expired" status is set.

In addition, or alternatively to, the current package status may be set to "return" indicating that the package is to be returned, via courier, to the sender system 2. This status may be set immediately after the "expired" status, or may be set as a result of the post system 4 communicating the expired status to the sender system 2. For instance, the sender system 2 may be notified of the expired status and reset the time limit, thus leaving the package in the post box terminal to allow the end customer 8 additional time to collect the package.

The "return" status may also be set upon cancellation of the order by the end customer 8. For example, when the end customer 8 wishes to cancel an order, and the package has already been deposited in the post box terminal, the sender system 2 may communicate a "cancelled" status to the post system 4, and the post system 4 may then communicate with the sender system 2 to indicate that the package is to be returned.

An "avizo" status may also be set. The "avizo" status is indicative of a certain amount of time that expires after the end customer 8 has been alerted, whereby the end customer 8 is then to be sent a further alert. For instance, the avizo time could be set to 24 hours, and thus after 24 hours, the post system 4 may set the status to "avizo" and provide a notification to the sender system 2. The sender system 2 may then send a second or further alert to the end customer 8 instantaneously or at a later time. The "avizo" status may be used separately from the "expired" status or subsequent time limit, but is preferentially used in combination. For example, after 24 hours the end customer 8 may be reminded, and after 48 hours the package has expired.

One exemplary embodiment concerning the application of the "avizo" status may employ a cron job. That is, the "avizo" status may be communicated to the sender system 2 via the post system 4 at regular intervals. For instance, the post system 4 may be scheduled to communicate the packages that entered the "avizo" state in a certain period, e.g., 8 p.m. to 7 a.m., at a predefined time, such as 7 a.m., to the sender system 2. In this manner, the sender system 2 may schedule a reminder to be sent at the predefined time. Indeed, a notification or reminder at an inappropriate time, for example, during the night, may be ignored or missed by the end customer 8. Equally, the sender system 2 may simply be adapted to alert the end customer 8 using its own cron job. Suppose, for example, the post system 4 communicates the change in package status as described above, i.e., when the change occurs. The sender system 2 may be adapted to send the reminders to the end customers 8 at predetermined times, every hour, for example. Such a system may be fully automated, thus reducing the necessity for manual sending of reminders to the end customer 8.

A "missing" status may be set at any time to indicate that the package is missing from the compartment. As an example, when an end customer 8 or courier attempts to collect the package, the compartment may be empty and thus the end customer 8 or courier may interact with the post box terminal to report that the compartment is empty.

A further embodiment may also allow for end customers 8 to return a package to the sender system 2, i.e., if the wrong package is sent or the quality of the product is not satisfactory. In this regard, a "return" status, or "complaint" status could be assigned, thus enabling the package to be returned to the sender system 2.

In some cases, the end customer 8 may wish to change the post box terminal, for ease of collection or the like. Accordingly, the end customer 8 may inform the sender system 2 of the desire to switch post box terminals. The sender system 2 may then communicate with the post system 4 to inform the post system 4 of a change of post box terminal. The post system 4 may then set the current package status to "return" or "relocate", to which the courier is informed of the new location.

Below is an exemplary tracking table which may be stored in the database 22 of the sender system 2. The table shows the packages/orders currently being processed, and their corresponding current package status. Optionally, a post box terminal identification number may also be present, however this is not necessary, as the package may be identified at the sender system 2 by the package identification number only.

| Unique Package Identification Number /Order Number | Status |
|---|---|
| 461234 / 001 | STORED |
| 465678 / 001 | STORED |
| 465567 / 023 | DELIVERED |
| 468345 / 028 | AVIZO |
| 460012 / 034 | RETURN |

One aspect of the present invention is the ability of the post system 4 to communicate the current package status to the sender system 2, both in relation to the production of the terminal list, but also when a current package status changes. For example, when the current package status changes from "in transit" or "sent" to "stored", the post system 4 is adapted to send a notification to the sender system 2. Such a notification may take the form of "package identification number; current status", for example. Accordingly, the tracking stable shown above may be updated on the basis of this notification.

In this way, no personal or identification information is communicated between the post system 4 and the sender system 2. In other words, the communication link between the sender system 2 and the post system 4 does not need to be a secure link as such, given that any attempts to "hack" the communication line will yield meaningless data. Indeed, a hacker obtains no useful information in this way owing to the fact that, preferentially, all the personal or identification information is stored at the sender system 2. If personal information is to be sent, then a secure communication channel may be temporarily established between the post system 4 and the sender system 2, using the communication modules 24, 44.

Moreover, the processing capabilities required at both the sender system 2 and the post system 4 are minimised, in addition to the data subsequently stored in the databases 22, 42. The post system 4 may only store an association between the package identification number and post box terminal/compartment number. When a current package status changes, the post system 4 is only required to identify the package identification number and communicate the current package status change to the sender system 2. The sender system 2 then receives the notification and updates the corresponding database accordingly.

A further aspect of the present invention is that of processing transactions, namely cash on delivery transactions. In this regard, a cash on delivery transaction may be one of three types; a physical cash transaction, a transaction via a credit or debit card, and a transaction via an end customer's device, such as a mobile phone. Accordingly, the post box terminals of the post network 6 may be adapted to receive all types of payment method.

Fig. 4 shows an exemplary method for processing a card transaction. At step S41, the end customer 8 interacts with the post network 6 or post box terminal. In one embodiment that is not shown, the post system 4 is aware of the transaction amount, i.e., the outstanding transaction that needs to be completed, via a communication from the sender system 2 at the time of communicating the package identification number. Regardless of whether or not the transaction amount is known, the post network 6 notifies the post system 4 that the end customer 8 wishes to perform a transaction, step S42. Accordingly, the post system 4 notifies the sender system 2 at step S43.

At this point, the sender system 2 may establish a secure channel with the post system 4 and/or post network 6, step S44. The secure channel may include some form of data encryption, or may be a secured hardwired communication. In a preferred embodiment, the secure communication is established via an interaction between the communication modules 24, 44. Once established, the post network 6 or post system 4 may communicate a confirmation that the secure channel is established to the sender system 2 (step S45). Thereafter, the sender system 2 communicates the transaction information to the post box terminal (step S46). At the same time, or shortly after, the post network 6 or post system 4 informs the end customer 8 that the secure channel is established and of a transaction amount such that the transaction can proceed (step S47).

As a result, the end customer 8 enters payment information, i.e., the card and corresponding PIN, into the appropriate location at the post box terminal (step S48), and the transaction information including the end customer's details are communicated to the sender system 2 via the secure channel (step S49).

Once received, the sender system 2 is adapted to transmit the details to the cash system 10, via a previously established secure channel between the two (step S410). The transaction then proceeds, whereby the end customer's account is debited by the transaction amount and an account belonging to the sender system 2 is credited. A confirmation is thus sent from the cash system 10 to the sender system 2 (step S411). Thereafter, the sender system 2 communicates the confirmation to the post system 4 and/or post network 6 (step S412), and the post system 4 or post network 6 communicates a confirmation to the end customer 8 and opens the compartment of the post box terminal (step S413).

The above configuration allows for a secure communication channel to be established on request, thereby enabling the transaction information to be communicated securely. Processing requirements during the communication of secure data can be increased, for example, via decryption and the like. However, by providing a secure communication only when required, i.e., only when notified by the post network 6 or post system 4, the processing requirements of the system as a whole are reduced. In other words, a secure communication is not required at all times.

In one configuration as discussed above, the post box terminal may be aware of the transaction amount. In other words, steps S44 to S47 are not required. Instead, the post network 6 notifies the sender system 2 of intention to perform the transaction at steps S42 and S43. Then, the end customer 8 interacts with the post network 6 at step S48, which results in an account of the post system 4 being credited. Accordingly, the transaction completes at step S413 thereafter. As a result of this method, the post system 4 credits or debits an account of the sender system 2 at a later stage. In other words, the transaction may proceed via the post system 4 rather than via the sender system 2.

Fig. 5A shows an exemplary transaction system involving a physical cash on delivery transaction. In this method, the end customer 8 interacts with the post network 6 at step S51. The post network 6 may then query the sender system 2 for the transaction amount (step S52), which is then provided to the post network 6 (step S53), or the post network 6 may already be aware of the transaction amount and skip steps S52 and S53. The end customer 8 may then insert the required amount of cash (step S54). Any change may also be provided via a float amount held at the post box terminal. Accordingly, the compartment is released at step S55 and the end customer 8 removes the package. In steps S56 and S57, the completion of the transaction is communicated to the sender system 2, which subsequently communicates with the cash system 10 to debit an account of the post system 4 by the transaction amount (or proportional amount), and correspondingly credit an account of the sender system 2.

In this way, no financially secure information is passed between the sender system 2 and the post system 4, and neither is any personal identification information related to the end customer 8.

Fig. 5B shows an exemplary method for the processing of a transaction via an end customer's personal device, such as a mobile phone. As in Fig. 5A, the end customer 8 interacts with the post network 6 at step S51. At step S58, the post network 6 or the post system 4 informs the sender system 2 of the desire of the end customer 8 to complete the transaction. The sender system 2 then informs the end customer 8, via the personal device, at step S59. This may include transmitting a transaction amount to the personal device and an option, such as a web link, to complete the transaction. The end customer 8 may then communicate via the sender system 2 with the cash system 10 (step S510). Upon completion of the transaction, the cash system 10 notifies the sender system 2 (step S511), which in turn notifies the post network 6 (step S512). An optional confirmation of the completion of the transaction may be communicated to the end customer 8. Thereafter, the package is released and the end customer 8 collects the package (step S513).

In some configurations, the post box terminal is provided with the ability to top-up an account of the end customer 8. The end customer 8 may not have enough credit in their corresponding mobile phone account, and thus require a top-up to complete the transaction.

In the aforementioned methods, the post system 4 communicates an indication of a transaction to be performed, via an initiation from the end customer 8. In this way, the transfer of personal and/or financial information of the end customer 8 is kept to a minimum as, in most cases, the only transfer of information between the post system 4 and the sender system 2 is the package identification number. Therefore, the sensitive information of the end customer 8 is never needlessly transferred which decreases the risk of the information being obtained by a third pa rty.

In some embodiments, the communication between the post system 4 and the sender system 2 may be performed via the use of an integration interface. The integration interface may possess a number of features depending upon the specific type of communication scheme implemented between the post system 4 and sender system 2. In one arrangement, the integration interface employs a data push mechanism that enables the sender system 2 to query the post system 4. In this sense, the integration interface can send a message via communication module 24 to communication module 42. The integration interface can be adapted to query any aspect of the post system 4, but is preferentially used to obtain the terminal list (either available post box terminals or all post box terminals including current statuses), or a current status of a particular package or packages, i.e., a request for the status of the package corresponding to one or more package identification numbers. The terminal list may also include data on packages that are assigned to the terminal, i.e., have a sent status, but are not yet delivered to the post box terminal.

A principle of the present invention is that the sender system 2 is adapted to track the corresponding packages that belong to the sender system 2. This, as highlighted above, reduces the amount of data that the post system 4 must process, owing to the fact that typically more than one sender system 2 may use the post system 4. To further enable the tracking of the packages, when a current package status changes, the post system 4 may be adapted to provide a time stamp associated with the notification to the sender system 2. This enables the sender system 2 to construct a log of the package status, from being sent by the sender system 2 to being collected by the end customer 8. Such tracking may be useful in identifying lost packages or errors within the overall posting method.

During the assigning or allocating of the post box terminal to the package at the sender system 2, the assigning typically includes assigning the package identification number to the package. However, other parameters and values may also be assigned to the package and/or communicated to the post system 4. For example, one or all of: an email address of the end customer 8, an email address of the sender, a package size, a phone number of the end customer 8, and a pick up code may also be assigned to the package. There is no necessity for these elements of information to be communicated to the post system 4, however, they may be nevertheless.

The pickup code is essentially a confirmation code that may be sent to the end customer 8 when collecting the package from the compartment. Accordingly, to verify that the end customer 8 is indeed the correct end customer 8, the end customer 8 may have to insert some verification information. Preferentially, this may be the pickup code, but may also be the email address or phone number of the end customer 8. This verification information may be communicated to the post system 4 when allocating the package to a post terminal.

Additional data may also be assigned to the package including one or all of: an on-delivery amount indicative of the cash on delivery transaction amount, an end customer identification number or code which may be a unique and random identifier assigned at the sender system 2, an expiration time indicating the time limit when the current package status should change to the "expired" status, an avizo time indicating the time limit when the current package status should change to the "avizo" status, and a carrier reference indicative of the carrier or courier used to transport the package.

In one embodiment, the allocation of the courier service is based upon a list of several courier agencies. The list may be managed by the post system 4, but is preferentially managed by the sender system 2. The post system 4 or sender system 2 may then identify a desired courier service based upon desired routes or locations that the couriers visit. For example, suppose one courier service typically delivers to one area, then the sender system 2 may select that courier to deliver the package based on the location of the allocated post box terminal. Moreover, the sender system 2 may be further adapted to monitor the actual locations of the vehicles in a courier service and planned routes thereof, and allocate a specific courier to collect and deliver a package based upon the delivery route and the delivery location provided by the end customer 8.

The present invention provides a method and system that enables the secure integration of a sender system 2 hosted by a retail company or the like with a post system 4 comprising a number of remote post box terminals adapted to receive a package. The method is performed such that secure and personal data is not transmitted between the post and sender systems unless a secure communication link is established. Moreover, due to the reduced amount of transmitted data between the two systems, the data processing requirements are reduced.

### Reference numerals

- 2: Sender system
- 4: Post system
- 6: Post network
- 8: End customer
- 10: Cash system
- 22: Database
- 24: Communication module
- 42: Database
- 44: Communication module

## Claims

1. A method for the sending of packages, the method comprising;
assigning, at a sender system (2), one or more packages to be sent to an end customer (8);
generating a terminal list indicative of the current status of one or more post box terminals, the one or more post box terminals monitored by a post system (4);
allocating, on the basis of the terminal list, one or more available post box terminals from the one or more post box terminals to the one or more packages;
providing the one or more packages to the one or more allocated post box terminals;
alerting the end customer (8) that the one or more packages are ready for collection;
transmitting transaction information to the end customer (8), indicative of a transaction to be performed, and, if the transaction is successful, allowing the end customer (8) to collect the one or more packages, wherein the post system (4) notifies the sender system (2) of a current package status change event when a current package status of the one or more packages changes and of a transaction event indicative of when the end customer initiates the transaction.

2. The method of claim 1, wherein the steps of generating a terminal list and allocating an available post box terminal are performed by the sender system (2), and wherein the transaction information is transmitted by the sender system (2) and the transaction is performed by the sender system (2) communicating with an external cash system (10) upon receiving the transaction event.

3. The method of any of the preceding claims, wherein the method further includes providing an integration interface, the integration interface enabling communication between the sender system (2) and the post system (4), the integration interface employing a data push mechanism that enables a user of the sender system (2) to request at least one of the terminal list, and a list of the current package statuses of the one or more packages from the post system (4).

4. The method of any of the preceding claims, wherein the current package status of the one or more packages includes a status of one of:
sent, indicating that the one or more packages are sent from the sender system (2) to a courier agency;
in transit, indicating that the one or more packages are in transit from a courier agency to the one or more post box terminals;
stored, indicating that the one or more packages are located at the one or more post box terminals;
claimed or delivered, indicating that the one or more packages have been claimed by the end customer (8) or delivered to the end customer (8);
expired, indicating that a time for which the end customer (8) may collect the one or more packages has expired;
return, indicating that the one or more packages are to be returned to the sender system (2) by a courier agency;
avizo, indicating that a certain time has elapsed since the end customer (8) was notified that the one or more packages were ready for collection and that the end customer (8) is to be reminded that the one or more packages are still awaiting collection;
missing, indicating that the one or more packages are not present at the one or more post box terminals and do not fall under one of the aforementioned statuses; and
cancelled, indicating that the end customer (8) has cancelled the collection or delivery of the one or more packages or that the sender system (2) has cancelled the collection or delivery of the one or more packages.

5. The method of any of the preceding claims, in particular claim 4, wherein the current package status change event is sent from the post system (4) to the sender system (2) when the current package status changes from a first current package status to a second current package status.

6. The method of the preceding claims, wherein the transmitting of the transaction amount includes the sender system (2) receiving a current package status change event indicative of a request to distribute the one or more packages at the one or more post box terminals to the end customer (8), providing a transaction amount to the end customer (8), receiving a request to pay the transaction amount at the post system (4), forwarding the request to pay the transaction amount to the sender system (2) as the transaction event, processing the transaction amount at the sender system (2) and debiting an account of the end customer (8), and sending a result of payment to the end customer (8); or wherein the transmitting of the transaction amount includes the post system (4) receiving a request to distribute the one or more packages at the one or more post box terminals to the end customer (8), transmitting, as the transaction event, a request for the transaction amount from the sender system (2), providing a transaction amount to the end customer (8), receiving a monetary transaction at the one or more post box terminals, crediting an account of the one or more post box terminals with an amount equal to the transaction amount, forwarding a confirmation of payment of the transaction amount to the sender system (2), debiting an account of the post system (4) by the transaction amount and crediting an account of the sender system (2) by the transaction amount.

7. The method of the preceding claims, in particular claim 6, wherein, when the debiting of the end customer's account results in a negative value, the result of payment includes a notice of failure of the transaction and the end customer (8) is prevented from claiming the one or more packages, wherein preferably the result of payment includes a link to the end customer's account thereby facilitating a top up of the end customer's account.

8. The method of any of the preceding claims, further comprising tracking the one or more packages, the tracking performed by the sender system (2), wherein the post system (4) provides the current package status change event of the one or more packages in addition to a time stamp associated with the current package status change events, the sender system (2) storing the current package status change events and the corresponding time stamp.

9. The method of any of the preceding claims, wherein the assigning includes assigning at least one or all of a package identification number, an email address of the end customer (8), an email address of a sender, a package size, a phone number of the end customer (8), and a pick up code to the one or more packages, wherein preferably the assigning further includes assigning at least one or all of an on-delivery amount, an end customer identification number or code, an expiration time, an avizo time, and a carrier reference to the one or more packages.

10. The method of any of the preceding claims, wherein the allocating includes allocating a post box terminal number to the one or more packages, the post box terminal number indicative of the location of the post box terminal to which the one or more packages are assigned.

11. The method of the preceding claims, wherein the providing of the one or more packages to the one or more post box terminals includes the sender system (2) or the post system (4) managing a list of courier agencies and selecting an appropriate courier agency depending upon a delivery schedule and/or delivery routes of the selected courier agency.

12. The method of the preceding claims, in particular claim 4 or claim 5, wherein the alerting includes sending an SMS or an email to the end customer, the SMS or email generated on the basis of a package status change event of the one or more packages, the SMS or email generated by either the sender system (2) or the post system (4), wherein preferably, the package status change event is indicative of a transition from a current package status of sent or in transit to stored.

13. The method of the preceding claims, in particular claim 3, wherein the list of current package statuses includes the current package status of the one or more packages assigned to the one or more post box terminals and includes a status for each of the one or more packages of one of:
sent, indicating that the one or more packages are sent from the sender system (2) to a courier agency;
in transit, indicating that the one or more packages are in transit from a courier agency to one or more post box terminals;
stored, indicating that the one or more packages are located at the one or more post box terminals;
claimed or delivered, indicating that the one or more packages have been claimed by one or more end customers (8) or delivered to the one or more end customers (8);
expired, indicating that a time for which the one or more end customers (8) may collect the one or more packages has expired;
return, indicating that the one or more packages are to be returned to the sender system (2) by a courier agency;
avizo, indicating that a certain time has elapsed since the one or more end customers (8) were notified that the one or more packages were ready for collection and that the one or more end customers (8) are to be reminded that the one or more packages are still awaiting collection;
missing, indicating that the one or more packages are not present at the one or more post box terminals and do not fall under one of the aforementioned statuses; and
cancelled, indicating that the one or more end customers (8) have cancelled the collection or delivery of the one or more packages or that the sender system (2) has cancelled the collection or delivery of the one or more packages.

14. A system for the sending of packages, in particular adapted to perform the method of one of claims 1 to 13, the system comprising;
a sender system (2), adapted to assign one or more packages to be sent to an end customer (8);
a post system (4) adapted to monitor the status of one or more post box terminals and generate a terminal list of the statuses of the one or more post box terminals, the one or more post box terminals adapted to receive one or more of the one or more packages, the post system (4) adapted to transmit transaction information to the end customer (8) indicative of a transaction to be performed, and, if the transaction is successful, allow the end customer (8) to collect the one or more packages;
wherein, the sender system (2) is further adapted to allocate, on the basis of the terminal list, an available post box terminal from the one or more post box terminals to the one or more packages;
wherein, the sender system (2) or the post system (4) is further adapted to alert the end customer (8) that the one or more packages are ready for collection, and
wherein the post system (4) is adapted to notify the sender system (2) of a current package status change event when a current package status of the one or more packages changes and of a transaction event indicative of when the end customer (8) initiates the transaction.

15. Computer readable device comprising instructions that, when executed, perform the method of any one of claims 1 to 13.
